# EUROPEAN PATENT SPECIFICATION

(11) **EP 4 343 643 B1**
(45) Date of publication and mention of the grant of the patent: **17.06.2026**
(21) Application number: 21948285.8
(22) Date of filing: 29.06.2021
(51) Int. Cl.: G06N 3/09, G06N 3/0442, G06N 5/01, G06N 20/20

(54) **INFORMATION PROCESSING DEVICE, PROGRAM, AND INFORMATION PROCESSING METHOD**
INFORMATIONSVERARBEITUNGSVORRICHTUNG, PROGRAMM UND INFORMATIONSVERARBEITUNGSVERFAHREN
DISPOSITIF DE TRAITEMENT D'INFORMATIONS, PROGRAMME ET PROCÉDÉ DE TRAITEMENT D'INFORMATIONS

(43) Date of publication of application: 27.03.2024
(73) Proprietor: MITSUBISHI ELECTRIC CORPORATION, Chiyoda-ku Tokyo 100-8310 (JP)
(72) Inventor: LIU Jikang, Tokyo 100-8310 (JP)
(74) Representative: Pfenning, Meinig & Partner mbB
(86) International application number: PCT/JP2021/024512
(87) International publication number: WO 2023/275976

(56) References cited:
- JP-A- 2018 073 349
- JP-A- 2019 040 475
- JP-A- 2020 194 414
- J. KIM ET AL: "Guiding deep learning system testing using surprise adequacy", ARXIV.ORG, CORNELL UNIVERSITY LIBRARY, 201 OLIN LIBRARY CORNELL UNIVERSITY ITHACA, NY 14853, 25 August 2018 (2018-08-25), XP091316938, DOI: 10.48550/arXiv.1808.08444
- A. LUKINA ET AL: "Into the unknown: active monitoring of neural networks", ARXIV:2009.06429V2, 7 June 2021 (2021-06-07), XP093175920, Retrieved from the Internet <URL:https://arxiv.org/abs/2009.06429v2> [retrieved on 20240617], DOI: 10.48550/arXiv.2009.06429
- L. KORYCKI, B. KRAWCZYK: "Concept drift detection from multi-class imbalanced data streams", PROCEEDINGS OF THE 37TH INTERNATIONAL CONFERENCE ON DATA ENGINEERING (ICDE'21), 19 April 2021 (2021-04-19), pages 1068 - 1079, XP033930281, DOI: 10.1109/ICDE51399.2021.00097
- P. C. AUSTIN: "An introduction to propensity score methods for reducing the effects of confounding in observational studies", MULTIVARIATE BEHAVIORAL RESEARCH, vol. 46, no. 3, 9 June 2011 (2011-06-09), pages 399 - 424, XP093175921, DOI: 10.1080/00273171.2011.568786
- OBAYASHI HITOSHI: "Interpretation of logistic regression and propensity score analysis", TENRI MEDICAL BULLETIN, vol. 19, no. 2, 25 December 2016 (2016-12-25), pages 71 - 79, XP093022421, ISSN: 1344-1817, DOI: 10.12936/tenrikiyo.19-008

## Description

### TECHNICAL FIELD

The disclosure relates to an information processing device, a program, and an information processing method.

### BACKGROUND ART

In recent years, various predictions have been made using learning models in machine learning.

For example, traffic demand prediction techniques based on statistical methods have been devised to predict demand for public transportation such as trains or buses, and have been applied to reduce traffic congestion at stations and adjust the operation capacity of trains or buses.

As a conventional technique, a traffic-demand prediction device has been disclosed that can predict future human flow data on the basis of an appropriate human flow prediction model that is dynamically updated (for example, refer to Patent Literature 1). The human flow data here refers to the number of people passing through a facility in a unit time.
Kim et al; Guiding deep learning system testing using surprise adequacy; arXiv: 1808.08444v1; pub. in 2018, discloses a test adequacy criterion for deep learning systems called Surprise Adequacy for Deep Learning Systems (SADL). SADL measures the novelty of a new input relative to the training data. It introduces two methods: Likelihood-based Surprise Adequacy (LSA), which uses Kernel Density Estimation to estimate the probability density of activation values, and Distance-based Surprise Adequacy (DSA), which calculates the Euclidean distance between activation traces of inputs. SADL evaluates the relative surprise of inputs by comparing them with activation traces from the training data, using these measurements to guide the selection of test inputs. Lukina et al; Into the unknown: active monitoring of neural networks; arXiv: 2009.06429v2; pub. 7 June 2021, discloses an algorithmic framework for active monitoring of neural networks. The framework includes a monitor that operates in parallel with the neural network and interacts with a human user for incremental adaptation. The monitor uses a quantitative metric to detect inputs from novel classes and to guide the adaptation process. The system is designed to maintain classification accuracy in dynamic environments by retraining both the neural network and the monitor based on new data collected during operation. Korycki, Krawczyk; Concept drift detection from multi-class imbalanced data streams; ICDE'21 (Proc), pp. 1068-1079; pub. 19 April 2021, discloses a method for detecting concept drift in data streams with multiple classes and imbalanced data. The method involves monitoring the performance of classifiers over time and identifying changes in the underlying data distribution. The approach uses various statistical tests and machine learning techniques to detect and adapt to concept drift, ensuring that the classifiers remain accurate and reliable as the data evolves.
Austin; An introduction to propensity score methods for reducing the effects of confounding in observational studies; Multivar. Behav. Res, vol. 46(3), pp. 399-424; pub. in 2011, discloses methods for using propensity scores to reduce confounding in observational studies. The document explains how propensity scores can be used to balance covariates between treated and untreated groups, thereby mimicking the conditions of a randomized controlled trial. The methods include various techniques for estimating propensity scores and using them in statistical analyses to obtain unbiased estimates of treatment effects.

### PRIOR ART REFERENCE

### PATENT REFERENCE

Patent Literature 1: Japanese Patent Application Publication No. 2019-040475

### SUMMARY OF THE INVENTION

### PROBLEM TO BE SOLVED BY THE INVENTION

Conventional traffic-demand prediction devices use a learning model, such as a human flow prediction model based on a multiple regression model, to predict new human flow data, and uses the average prediction accuracy of this data to determine whether or not to relearn the parameters of the learning model.

Therefore, it is not possible to consider data such as rare scenes that occur infrequently, represented by extreme weather or traffic accidents, even if such data is critical data. For this reason, data that is used as a condition for determining the relearning of the learning model includes a smaller amount of critical data such as rare scenes, and this results in highly biased data. Therefore, conventional techniques have a problem of not being able to determine the relearning conditions of a learning model with valid conditions.

Accordingly, it is an object of one or more aspects of the disclosure to prevent a significant bias in critical data and to be able to determine whether or not a learning model is to be relearned under more valid conditions.

### MEANS OF SOLVING THE PROBLEM

The invention is defined in independent claims 1, 5 and 6, respectively directed to: an information processing device configured to predict a degree of traffic congestion in public transportation; a computer-implemented information method for predicting a degree of traffic congestion in public transportation; and a corresponding computer program. Preferred embodiments are defined in dependent claims 2-4.

### EFFECTS OF THE INVENTION

According to one or more aspects of the disclosure, it is possible to prevent a significant bias in critical data and to determine whether or not a learning model is to be relearned under more valid conditions.

### BRIEF DESCRIPTION OF THE DRAWINGS

FIG. 1 is a block diagram schematically illustrating a configuration of an information processing system.
FIG. 2 is a schematic diagram illustrating an example of an LSTM model.
FIGS. 3A to 3C are schematic diagrams for explaining processing executed by a relearning determining unit.
FIG. 4 is a schematic diagram for explaining the frequency of appearance of a critical layer.
FIG. 5 is a schematic diagram for explaining the frequency of appearance of critical data.
FIG. 6 is a block diagram illustrating a hardware configuration example of an information processing device.
FIG. 7 is a flowchart illustrating a process executed when an information processing device relearns a prediction model.

### MODE FOR CARRYING OUT THE INVENTION

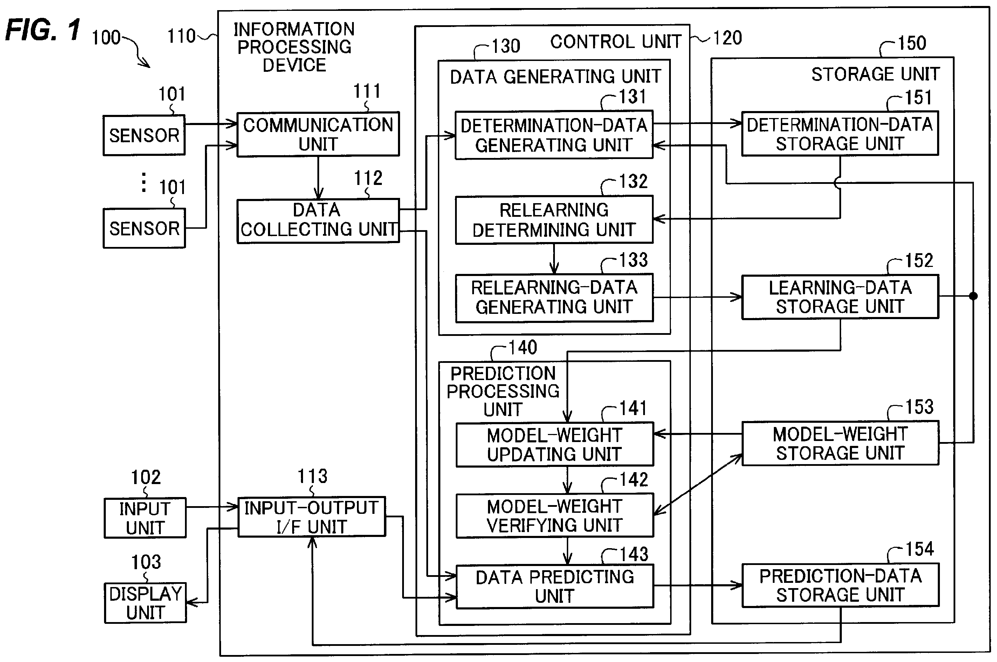

FIG. 1 is a block diagram schematically illustrating a configuration of an information processing system 100.

Here, the information processing system 100 is described as a traffic demand prediction system that predicts demand for public transportation such as trains or buses.

The information processing system 100 includes sensors 101, an input unit 102, a display unit 103, and an information processing device 110.

The sensors 101 generate sensor data indicating external information related to traffic demand and transmit the sensor data to the information processing device 110. Although the number of sensors 101 is not particularly limited, it is assumed here that multiple sensors 101 are provided.

The input unit 102 accepts input of various instructions for the information processing device 110. The inputted instructions are sent to the information processing device 110.

For example, the input unit 102 accepts input of the date of performing demand prediction.

Here, the input unit 102 can be implemented by an input device, such as a keyboard or a mouse.

The display unit 103 outputs the processing result from the information processing device 110.

For example, the display unit 103 displays the result of the prediction of future traffic demand made by the information processing device 110.

Here, the display unit 103 is specifically implemented by a display such as a liquid crystal display.

The information processing device 110 processes the external information indicated by the sensor data obtained from the sensors 101 in accordance with an instruction from the input unit 102, and causes the display unit 103 to display the processing result.

For example, the information processing device 110 uses a prediction model, which is a pre-learned learning model, to predict traffic demand on a date inputted to the input unit 102 on the basis of the external information indicated by the sensor data, and causes the display unit 103 to display the prediction result. In the present embodiment, the information processing device 110 functions as a traffic-demand predicting device. The prediction model is also referred to as first learning model.

Here, the way the prediction model is learned differs between when a pre-learned weight is set and when a pre-learned weight is not set.

When no pre-learned weight is set, the prediction model is initialized with the default weight. The default weight is, for example, the weight matrix when all vectors are set to zero. Model input data converted from sensor data acquired in advance is used as learning data to learn the prediction model. The weight learned in this way is stored in the information processing device 110.

When a pre-learned weight is set, the prediction model is initialized with the most recently stored weight. Model input data converted from sensor data acquired in advance is used as learning data to learn the prediction model. The weight learned in this way is stored in the information processing device 110.

The information processing device 110 includes a communication unit 111, a data collecting unit 112, an input-output interface unit (input-output I/F unit) 113, a control unit 120, and a storage unit 150.

The communication unit 111 receives sensor data from the sensors 101. The received sensor data is given to the data collecting unit 112.

The data collecting unit 112 collects sensor data from the multiple sensors 101.

For example, the data collecting unit 112 receives sensor data from the communication unit 111, converts the sensor data into model input data adapted to the input format of the prediction model, and gives the model input data to the control unit 120.

The input-output I/F unit 113 is connected to the input unit 102 or the display unit 103.

For example, the input-output I/F unit 113 receives date data indicating a date of performing demand prediction from the input unit 102 and gives the date data to the control unit 120.

The input-output I/F unit 113 converts prediction result data outputted from a prediction-data storage unit 154 into signal data that can be used by the display unit 103 and outputs the signal data to the display unit 103.

The control unit 120 controls the processing executed by the information processing device 110.

The control unit 120 includes a data generating unit 130 and a prediction processing unit 140.

The data generating unit 130 generates determination batch data for determining the relearning of the prediction model. The data generating unit 130 also determines whether or not to relearn the prediction model by using the determination batch data. When it is determined that the prediction model is to be relearned, the data generating unit 130 generates relearning batch data for relearning the prediction model.

The data generating unit 130 includes a determination-data generating unit 131, a relearning determining unit 132, and a relearning-data generating unit 133.

The determination-data generating unit 131 generates determination batch data including learned data, which is learning data that has already been used to learn the prediction model, and unlearned data corresponding to sensor data. Here, the unlearned data is model input data converted from sensor data.

Specifically, the determination-data generating unit 131 generates determination batch data for determining whether or not to relearn the prediction model with the unlearned data, which is model input data converted from sensor data given from the data collecting unit 112 and not used for learning of the prediction model, the learned data, which is learned model input data stored in the storage unit 150, and the weight of a past optimal prediction model stored in the storage unit 150. The determination batch data is stored in the storage unit 150.

Here, the number of learned data pieces is constant, and the learned data is, for example, critical data of a predetermined period in the past (for example, a few weeks) . Critical data is data having a high degree of importance.

The relearning determining unit 132 reads the determination batch data stored in the storage unit 150 and uses the parameters of the past optimal model to evaluate the prediction accuracy of each piece of the unlearned data and learned data.

For example, the relearning determining unit 132 stratifies each of the unlearned data and the learned data with covariate data included in the model input data, and uses the degree of importance of each layer and the degrees of importance of the unlearned data and learned data allocated to the respective layers to determine the relearning.

Here, the relearning determining unit 132 calculates propensity scores for the learned data and the unlearned data corresponding to the sensor data by using covariates that affect the result of the prediction, to perform stratification by allocating the learned data and the unlearned data to multiple layers. Then, based on the stratification result, the relearning determining unit 132 uses the frequency of appearance of critical layers, which are layers determined to have a high degree of importance out of the multiple layers, and the frequency of appearance of critical data, which is data determined to have a high degree of importance out of the unlearned data and the learned data, and determines whether or not to relearn the prediction model.

A specific processing example of the relearning determining unit 132 will now be explained.

First, stratification based on the relearning determining unit 132 will be explained.

Here, the relearning decision unit 132 calculates propensity scores through a causal inference technique that analyzes the propensity of guidance measures by using a polynomial logit model or a linear multiple regression model, and performs dimensional reduction of the covariate data to perform stratification.

Specifically, when there is a change in the degree of congestion at a station or in a vehicle due to an external factor such as a traffic accident or extreme weather, station attendants direct the flow of people through measures such as in-vehicle announcements and manual guidance. The relearning determining unit 132 collects the history of these guidance measures, analyzes the covariate data such as weather, service information, or event information with covariates, and calculates the probabilities of the guidance measures with a gradient boosting decision tree or a polynomial logit model. The probabilities of the guidance measures calculated with the covariates are defined as propensity scores of the guidance measures. The value of a propensity score is a real number between zero and one. In the analysis of causality, a covariate is a factor that is observed in addition to the factor being evaluated and affects the causality. Here, a covariate is a variable affecting traffic demand, the degree of train congestion, or the like.

The relearning determining unit 132 then sets a threshold for each layer by using a propensity score of a guidance measure and stratifies the unlearned data and the learned data. For example, data having a propensity score equal to or greater than zero and smaller than 0.03 is allocated to a layer of low measure probability. Data having a propensity score equal to or greater than 0.3 and smaller than 0.6 is allocated to a layer of medium measure probability. Data having a propensity score equal to or greater than 0.6 and equal to or smaller than one is allocated to a layer of high measure probability.

This stratification is an example, and, for example, the threshold for stratification and the number of layers can be adjusted depending on the balance of the covariates of the actual real data for learning.

Next, the relearning determining unit 132 calculates the average prediction accuracies of the unlearned data and the learned data allocated to the respective layers and further calculates the difference in the prediction accuracies of the unlearned data and the learned data allocated to the respective layers.

Then, when there is a layer whose calculated average prediction accuracy is equal to or lower than a predetermined threshold or when there is a layer whose difference in the calculated prediction accuracy is equal to or more than a predetermined threshold, the relearning determining unit 132 labels such a layer as critical and labels all pieces of data contained in such a layer as critical. Here, the layer labeled as critical is a critical layer. The data labeled as critical is critical data.

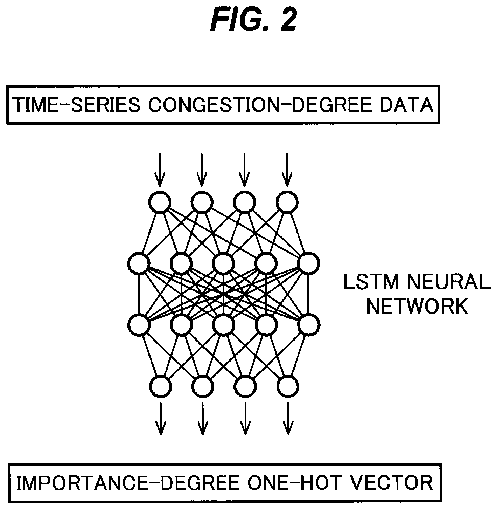

The relearning determining unit 132 determines whether or not the data contained in layers having calculated average prediction accuracies higher than a predetermined threshold and the data contained in layers having differences in calculated prediction accuracies smaller than a predetermined threshold are critical data. This determination can be made by using a deep learning model in machine learning. This deep learning model is a learning model different from the prediction model. This deep learning model is also referred to as second learning model. The parameters of this deep learning model are those that have been learned by preparing learning data in advance. Here, as an example of a deep learning model for critical data determination, the long short-term memory (LSTM) model illustrated in FIG. 2 can be used. The input of this model is a time-series change amount in traffic demand prediction, which is time-series data, and the output of this model is an importance-degree one-hot vector.

The relearning determining unit 132 then determines that the prediction model is to be relearned when the frequency of appearance of critical layers is equal to or higher than a predetermined threshold or when the frequency of appearance of critical data is equal to or higher than a predetermined threshold.

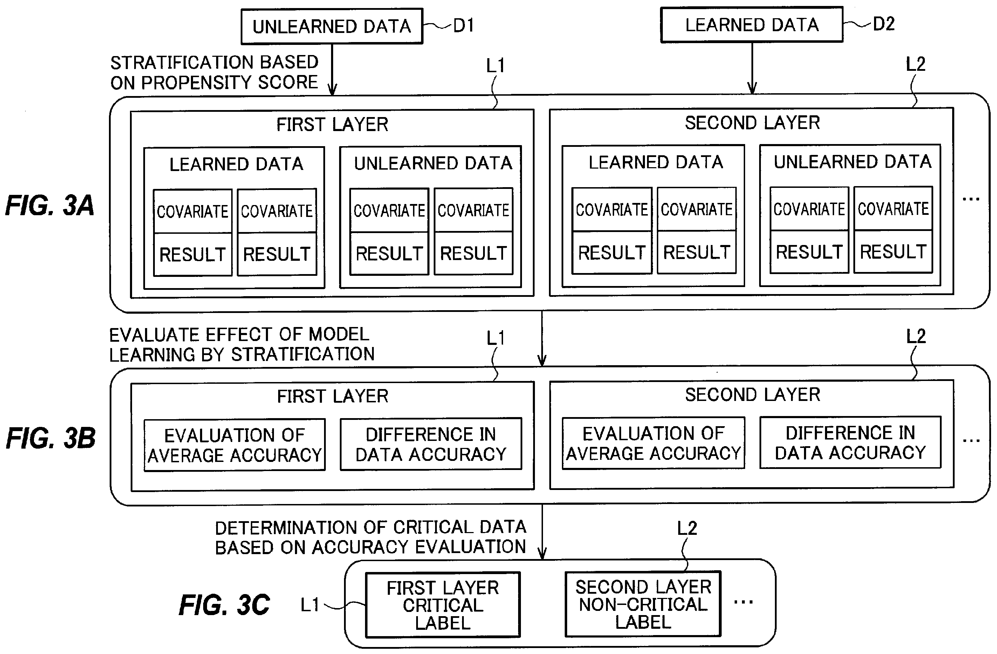

FIGS. 3 to 5 are schematic diagrams for explaining processing executed by the relearning determining unit 132.

The relearning determining unit 132 reads the determination batch data stored in the storage unit 150, calculates a propensity score for each of unlearned data D1 and learned data D2 by using the parameters of a past optimal model, and performs dimensional reduction of the covariate data to perform stratification.

Thus, as illustrated in FIG. 3A, the learned data and the unlearned data are allocated to a first layer L1, a second layer L2, ...

Next, as illustrated in FIG. 3B, the relearning determining unit 132 calculates the average prediction accuracies of the unlearned data and the learned data allocated to the respective layers L1, L2, ..., and further calculates the differences in the prediction accuracies of the unlearned data and the learned data allocated to the respective layers.

The relearning determining unit 132 then uses the calculated average prediction accuracies and the calculated differences in the prediction accuracies to label each layer as critical or non-critical. In FIG. 3C, the first layer L1 is labeled as critical, and the second layer L2 is labeled as non-critical.

The relearning determining unit 132 also labels all data pieces contained in a layer labeled as critical. The relearning determining unit 132 then determines whether or not each piece of data contained in the layer labeled as non-critical is critical data, labels the data determined to be critical data as critical, and labels the data not determined to be critical data as non-critical. A layer labeled as non-critical is also referred to as non-critical layer, and data labeled as non-critical is also referred to as non-critical data.

The relearning determining unit 132 then determines that the prediction model is to be relearned when the frequency of appearance of critical layers, which are layers labeled as critical, is equal to or higher than a predetermined threshold or when the frequency of appearance of critical data is equal to or higher than a predetermined threshold.

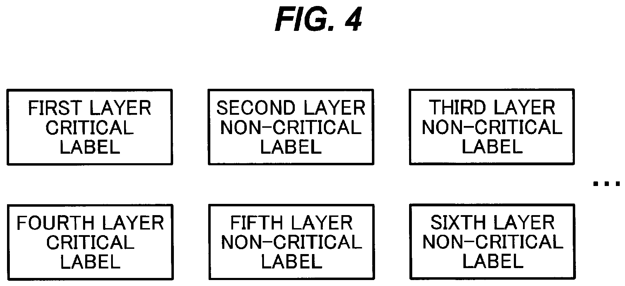

For example, as illustrated in FIG. 4, when the frequency of appearance of critical layers is 1/3 and the threshold for the frequency of appearance of critical layers is 0.5, the frequency of appearance of critical layers is not higher than a threshold.

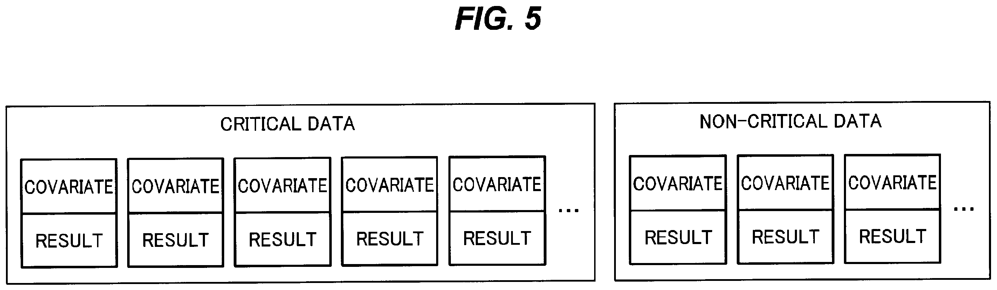

On the other hand, when the frequency of appearance of critical data is 5/8, as illustrated in FIG. 5, and the threshold for the frequency of appearance of critical data is 0.5, the frequency of appearance of critical data is higher than a threshold.

In such a case, the relearning determining unit 132 determines that the prediction model has not been properly learned and that the weight of the prediction model needs to be relearned. Here, when the frequency of appearance of critical layers is higher than a threshold, it can be determined that the critical data is too biased toward layers containing critical data, and the weight of the prediction model is relearned to prevent such a bias.

In the examples of FIGS. 4 and 5, relearning the weight of the prediction model is not necessary on the basis of the frequency of appearance of critical layers, but the frequency of appearance of critical data is increased due to a bias in the distribution of the critical data. Therefore, in the example illustrated in FIG. 5, it is determined that the weight of the prediction model needs to be relearned.

When the relearning determining unit 132 determines that relearning is necessary, the relearning-data generating unit 133 re-samples the learning data and the unlearned data in the same proportion as that of the data in each layer to generate the relearning batch data, and causes the storage unit 150 to store the relearning batch data.

The prediction processing unit 140 makes a prediction based on sensor data by using a prediction model that is a learning model. The prediction processing unit 140 relearns the prediction model when the relearning determining unit 132 determines that the prediction model is to be relearned.

The prediction processing unit 140 includes a model-weight updating unit 141, a model-weight verifying unit 142, and a data predicting unit 143.

The model-weight updating unit 141 is a relearning unit that reads the relearning batch data stored in a learning-data storage unit 152 and relearns the prediction model by using the relearning batch data.

For example, the model-weight updating unit 141 updates the weight of the prediction model stored in a model-weight storage unit 153 by using the relearning batch data.

The model-weight verifying unit 142 determines whether or not the weight updated by the model-weight updating unit 141 is optimal. For example, to reduce the prediction error of an updated weight, the model-weight verifying unit 142 determines that the updated weight is optimal when the prediction error of the updated weight is smaller than the prediction error of a past optimal weight.

The model-weight verifying unit 142 then gives the updated weight to the data predicting unit 143 when it is determined that the updated weight is optimal and gives the past optimal weight when it is determined that the updated weight is not optimal.

The data predicting unit 143 is a predicting unit that uses the weight provided by the model-weight verifying unit 142 to predict traffic demand on the date inputted to the input unit 102 on the basis of the sensor data collected by the data collecting unit 112. The data predicting unit 143 then causes the storage unit 150 to store prediction result data indicating the result of the prediction.

The storage unit 150 stores programs and data necessary for the processing executed by the information processing device 110.

The storage unit 150 includes a determination-data storage unit 151, the learning-data storage unit 152, the model-weight storage unit 153, and the prediction-data storage unit 154.

The determination-data storage unit 151 stores the determination batch data generated by the determination-data generating unit 131.

The learning-data storage unit 152 stores the relearning batch data generated by the relearning-data generating unit 133. It is assumed that the learning data already used for learning of the prediction model is also stored in the learning-data storage unit 152 as learned data. Therefore, the relearning batch data also becomes learned data after it is used to relearn the prediction model.

The model-weight storage unit 153 stores the weight of the prediction model.

The prediction-data storage unit 154 stores demand prediction data indicating a demand prediction, which is the result of the prediction made by the data predicting unit 143.

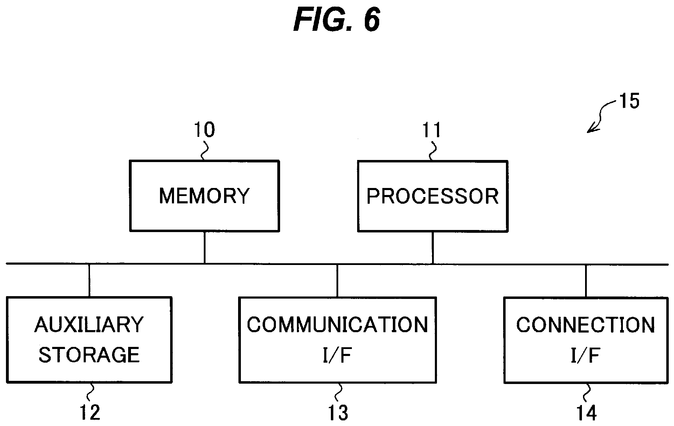

The information processing device 110 described above can be implemented by a computer 15 that includes a volatile or nonvolatile memory 10, a processor 11 such as a central processing unit (CPU), an auxiliary storage 12 such as a hard disk drive (HDD) or a solid-state drive (SSD), a communication I/F 13 such as a network interface card (NIC), and a connection I/F 14 such as a universal serial bus (USB), as illustrated in FIG. 6.

For example, the data collecting unit 112 and the control unit 120 can be implemented by the processor 11 executing the programs stored in the memory 10.

The storage unit 150 can be implemented by the memory 10 or the auxiliary storage 12.

The communication unit 111 can be implemented by the communication I/F 13.

The input-output I/F unit 113 can be implemented by the connection I/F 14.

The above-described programs may be provided via a network or may be recorded and provided on a recording medium. That is, such programs may be provided as, for example, program products.

The operation of the information processing device 110 will now be explained.

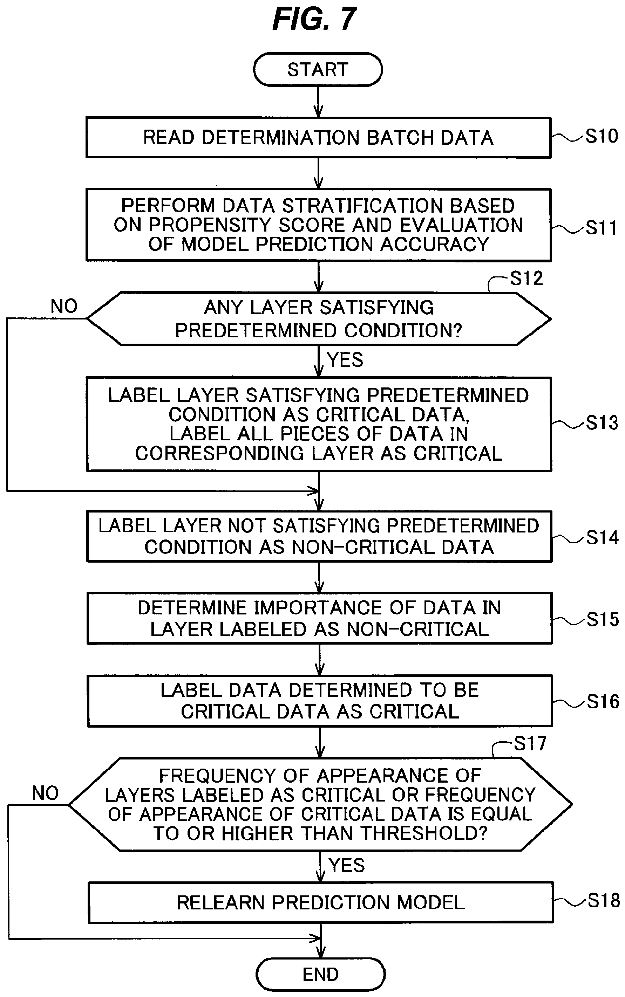

FIG. 7 is a flowchart illustrating a process executed when the information processing device 110 relearns a prediction model.

First, the relearning determining unit 132 reads determination batch data from the determination-data storage unit 151 (step S10). The determination batch data is updated, for example, once in a predetermined period (e.g., a few hours), and when the determination batch data is updated, the relearning determining unit 132 determines whether or not to relearn the prediction model.

Next, the relearning determining unit 132 reduces the number of dimensions of the covariate data included in the unlearned data and the learned data in the determination batch data read in step S10 by one dimension by using a statistical causal inference technique that analyzes measure propensity with a polynomial logit model or linear multiple regression model, and performs stratification (step S11). The relearning determining unit 132 calculates the average prediction accuracy of each stratified layer and the difference in the prediction accuracy between the unlearned data and the learned data.

Next, the relearning determining unit 132 determines whether or not there is a layer having an average prediction accuracy calculated in step S11 that is higher than a predetermined threshold or a layer having a difference in the prediction accuracy calculated in step S11 that is higher than a predetermined threshold (step S12). If there is such a layer (Yes in step S12), the process proceeds to step S13, and if there is no such layer (No in step S12), the process proceeds to step S14.

In step S13, the layers having an average prediction accuracy calculated in step S11 that is higher than a predetermined threshold and the layers having a difference in the prediction accuracy calculated in step S11 that is higher than a predetermined threshold are labeled as critical, and all pieces of data contained in such layers are labeled as critical.

In step S14, the layers having average prediction accuracies calculated in step S11 that are lower than a predetermined threshold and the layers having differences in the prediction accuracies calculated in step S11 that are lower than a predetermined threshold are labeled as non-critical.

Next, the relearning determining unit 132 uses a supervised LSTM model to determine whether or not the data contained in the non-critical layers becomes critical data (step S15).

The relearning determining unit 132 then labels the data determined to be critical data as critical in step S15. The data labeled as critical is also referred to as critical data.

The relearning determining unit 132 then determines whether or not at least one of the following conditions is satisfied: a first condition that is the frequency of appearance of critical layers equal to or higher than a predetermined threshold (for example, 0.5) and a second condition that is the frequency of appearance of critical data equal to or higher than a predetermined threshold (for example, 0.5) (step S17). If at least one of the first and second conditions is satisfied (Yes in step S17), the process proceeds to step S18, and if neither the first condition nor the second condition is satisfied (No in step S17), the process ends.

In step S18, the relearning determining unit 132 determines that the prediction model is to be relearned, the relearning-data generating unit 133 generates relearning batch data, and the model-weight updating unit 141 relearns the prediction model on the basis of the relearning batch data.

According to the above-described embodiment, not only the frequency of appearance of critical data but also the frequency of appearance of critical layers is referred to determine whether or not to relearn the prediction model, so that the critical data can be prevented from being too biased toward one layer. Therefore, whether or not to relearn the prediction model can be determined under more valid conditions.

According to the above-described embodiment, since relearning is performed intensively by using critical data, the degree of convergence of the learning of a prediction model and the prediction accuracy of rare scene data or critical data with a high degree of congestion can be improved.

Furthermore, since the amount of non-critical data in the relearning batch data can be reduced, the amount of data used in relearning can be reduced.

### DESCRIPTION OF REFERENCE CHARACTERS

100 information processing system; 101 sensor; 102 input unit; 103 display unit; 110 information processing device; 111 communication unit; 112 data collecting unit; 113 input-output I/F unit; 120 control unit; 130 data generating unit; 131 determination-data generating unit; 132 relearning determining unit; 133 relearning-data generating unit; 140 prediction processing unit; 141 model-weight updating unit; 142 model-weight verifying unit; 143 data predicting unit; 150 storage unit; 151 determination-data storage unit; 152 learning-data storage unit; 153 model-weight storage unit; 154 prediction-data storage unit.

## Claims

1. An information processing device (110) configured to predict a degree of traffic congestion in public transportation, comprising:
a data collecting unit (112) configured to collect sensor data from a plurality of sensors (101), the sensor data indicating an external factor related to a traffic accident or extreme weather;
a determination-data generating unit (131) configured to generate determination batch data including learned data and unlearned data, the learned data corresponding to the sensor data and being learning data that has already been used to learn a first learning model for making a prediction of the degree of traffic congestion based on the sensor data, the unlearned data corresponding to the sensor data and being not used to learn the first learning model;
a relearning determining unit (132) configured to calculate propensity scores for the learned data and the unlearned data by using a covariate affecting the degree of traffic congestion predicted by the first learning model to perform stratification by allocating the learned data and the unlearned data to a plurality of layers, and to determine whether or not the first learning model is to be relearned by using a frequency of appearance of a critical layer and a frequency of appearance of critical data from a result of the stratification, the critical layer being a layer determined to have a high degree of importance out of the plurality of layers, the critical data being data determined to have a high degree of importance out of the unlearned data and the learned data; and
a relearning unit (141) configured to relearn the first learning model when the relearning determining unit (132) determines that the learning model is to be relearned,
wherein the relearning determining unit (132) is further configured to determine, as the critical layer, the layer having the high degree of importance out of the plurality of layers as: a layer having an average prediction accuracy equal to or lower than a predetermined threshold or a layer whose difference between a prediction accuracy of the unlearned data and a prediction accuracy of the learned data is equal to or larger than a predetermined threshold.

2. The information processing device (110) according to claim 1, wherein the relearning determining unit (132) is further configured to determine that the first learning model is to be relearned when the frequency of appearance of the critical layer is equal to or higher than a predetermined threshold and/or when the frequency of appearance of the critical data is equal to or higher than a predetermined threshold.

3. The information processing device (110) according to claim 1 or 2, wherein the relearning determining unit (132) is configured to determine the unlearned data and the learned data contained in the critical layer to be the critical data.

4. The information processing device (110) according to any one of claims 1 to 3, wherein the relearning determining unit (132) is configured to use a second learning model to determine whether or not the unlearned data and the learned data contained in layers of the plurality of layers other than the critical layer is the critical data, the second learning model being a learning model different from the first learning model.

5. A computer-implemented information processing method for predicting a degree of traffic congestion in public transportation, comprising:
collecting sensor data from a plurality of sensors (101), the sensor data indicating an external factor related to a traffic accident or extreme weather;
generating determination batch data including learned data and unlearned data, the learned data corresponding to the sensor data and being learning data that has already been used to learn a learning model for making a prediction of the degree of traffic congestion based on the sensor data, the unlearned data corresponding to the sensor data and being not used to learn the learning model;
calculating propensity scores for the learned data and the unlearned data by using a covariate affecting the degree of traffic congestion predicted by the learning model to perform stratification by allocating the learned data and the unlearned data to a plurality of layers; and
determining whether or not to the learning model is to be relearned by using a frequency of appearance of a critical layer and a frequency of appearance of critical data from a result of the stratification, the critical layer being a layer determined to have a high degree of importance out of the plurality of layers, the critical data being data determined to have a high degree of importance out of the unlearned data and the learned data; and
relearning the learning model based on the determination that the learning model is to be relearned,
wherein a layer having average prediction accuracy equal to or lower than a predetermined threshold or a layer whose difference between a prediction accuracy of the unlearned data and a prediction accuracy of the learned data is equal to or larger than a predetermined threshold is determined as the critical layer of the plurality of layers.

6. A program for predicting a degree of congestion in public transportation, wherein, when executed by a computer, the program causes the computer to perform the method according to claim 5.

## Patentansprüche

1. Informationsverarbeitungseinrichtung (110), die konfiguriert ist, einen Grad an Verkehrsstauung im öffentlichen Personennahverkehr vorherzusagen, umfassend:
eine Datenerhebungseinheit (112), die konfiguriert ist, Sensordaten von einer Vielzahl von Sensoren (101) zu erheben, wobei die Sensordaten einen externen Faktor anzeigen, der sich auf einen Verkehrsunfall oder ein Wetterextrem bezieht;
eine Bestimmungsdaten-Generierungseinheit (131), die konfiguriert ist, Bestimmungs-Batchdaten zu generieren, die erlernte Daten und nicht erlernte Daten enthalten, wobei die erlernten Daten den Sensordaten entsprechen und Lerndaten sind, die bereits verwendet wurden, um ein erstes Lernmodell zu erlernen, um eine Vorhersage des Grades an Verkehrsstauung auf der Grundlage der Sensordaten zu treffen, und wobei die nicht erlernten Daten den Sensordaten entsprechen und nicht verwendet werden, um das erste Lernmodell zu erlernen;
eine Neulern-Bestimmungseinheit (132), die konfiguriert ist, Propensity-Scores für die erlernten Daten und die nicht erlernten Daten zu berechnen, indem eine Kovariate verwendet wird, die den durch das erste Lernmodell vorhergesagten Grad an Verkehrsstauung beeinflusst, um eine Stratifizierung durchzuführen, indem die erlernten Daten und die nicht erlernten Daten einer Vielzahl von Layern zugeordnet werden, und zu bestimmen, ob das erste Lernmodell neu zu erlernen ist oder nicht, indem eine Häufigkeit eines Auftretens einer kritischen Layer und eine Häufigkeit eines Auftretens von kritischen Daten aus einem Ergebnis der Stratifizierung verwendet werden, wobei die kritische Layer eine Layer ist, für die bestimmt wurde, einen hohen Grad an Bedeutsamkeit aufzuweisen, aus der Vielzahl von Layern, wobei die kritischen Daten solche Daten sind, für die bestimmt wurde, einen hohen Grad an Bedeutsamkeit aus den nicht erlernten Daten und den erlernten Daten aufzuweisen; und
eine Neulerneinheit (141), die konfiguriert ist, das erste Lernmodell neu zu erlernen, wenn die Neulern-Bestimmungseinheit (132) bestimmt, dass das Lernmodell neu zu erlernen ist,
wobei die Neulern-Bestimmungseinheit (132) ferner konfiguriert ist, die Layer, aufweisend den hohen Grad an Bedeutsamkeit, aus der Vielzahl von Layern als die kritische Layer zu bestimmen als: eine Layer, aufweisend eine durchschnittliche Vorhersagegenauigkeit, die gleich oder kleiner als ein vorbestimmter Schwellenwert ist, oder eine Layer, deren Differenz zwischen einer Vorhersagegenauigkeit der nicht erlernten Daten und einer Vorhersagegenauigkeit der erlernten Daten gleich oder größer als ein vorbestimmter Schwellenwert ist.

2. Informationsverarbeitungseinrichtung (110) nach Anspruch 1, wobei die Neulern-Bestimmungseinheit (132) ferner konfiguriert ist, zu bestimmen, dass das erste Lernmodell neu zu erlernen ist, wenn die Häufigkeit eines Auftretens der kritischen Layer gleich oder höher als ein vorbestimmter Schwellenwert ist und/oder wenn die Häufigkeit eines Auftretens der kritischen Daten gleich oder höher als ein vorbestimmter Schwellenwert ist.

3. Informationsverarbeitungseinrichtung (110) nach Anspruch 1 oder 2, wobei die Neulern-Bestimmungseinheit (132) konfiguriert ist, zu bestimmen, dass die nicht erlernten Daten und die erlernten Daten, die in der kritischen Layer enthalten sind, die kritischen Daten sind.

4. Informationsverarbeitungseinrichtung (110) nach einem der Ansprüche 1 bis 3, wobei die Neulern-Bestimmungseinheit (132) konfiguriert ist, ein zweites Lernmodell zu verwenden, um zu bestimmen, ob die nicht erlernten Daten und die erlernten Daten, die in anderen Layern der Vielzahl von Layern als der kritischen Layer enthalten sind, die kritischen Daten sind oder nicht, wobei das zweite Lernmodell ein Lernmodell ist, das sich von dem ersten Lernmodell unterscheidet.

5. Computerimplementiertes Informationsverarbeitungsverfahren zur Vorhersage eines Grades an Verkehrsstauung im öffentlichen Personennahverkehr, umfassend:
Erheben von Sensordaten von einer Vielzahl von Sensoren (101), wobei die Sensordaten einen externen Faktor anzeigen, der sich auf einen Verkehrsunfall oder ein Wetterextrem bezieht;
Generieren von Bestimmungs-Batchdaten, die erlernte Daten und nicht erlernte Daten enthalten, wobei die erlernten Daten den Sensordaten entsprechen und Lerndaten sind, die bereits verwendet wurden, um ein erstes Lernmodell zu erlernen, um eine Vorhersage des Grades an Verkehrsstauung auf der Grundlage der Sensordaten zu treffen, und wobei die nicht erlernten Daten den Sensordaten entsprechen und nicht verwendet werden, um das erste Lernmodell zu erlernen;
Berechnen von Propensity-Scores für die erlernten Daten und die nicht erlernten Daten, indem eine Kovariate verwendet wird, die den durch das erste Lernmodell vorhergesagten Grad an Verkehrsstauung beeinflusst, um Stratifizierung durchzuführen, indem die erlernten Daten und die nicht erlernten Daten einer Vielzahl von Layern zugeordnet werden; und
Bestimmen, ob das erste Lernmodell neu zu erlernen ist oder nicht, indem eine Häufigkeit eines Auftretens einer kritischen Layer und eine Häufigkeit eines Auftretens von kritischen Daten aus einem Ergebnis der Stratifizierung verwendet werden, wobei die kritische Layer eine Layer ist, für die bestimmt wurde, einen hohen Grad an Bedeutsamkeit aus der Vielzahl von Layern aufzuweisen, wobei die kritischen Daten solche Daten sind, für die bestimmt wurde, einen hohen Grad an Bedeutsamkeit aus den nicht erlernten Daten und den erlernten Daten aufzuweisen; und
Neulernen des Lernmodells auf der Grundlage der Bestimmung, dass das Lernmodell neu zu erlernen ist,
wobei eine Layer, aufweisend eine durchschnittliche Vorhersagegenauigkeit, die gleich oder kleiner als ein vorbestimmter Schwellenwert ist, oder eine Layer, deren Differenz zwischen einer Vorhersagegenauigkeit der nicht erlernten Daten und einer Vorhersagegenauigkeit der erlernten Daten gleich oder größer als ein vorbestimmter Schwellenwert ist, als die kritische Layer der Vielzahl von Layern bestimmt ist.

6. Programm zur Vorhersage eines Stauungsgrades im öffentlichen Personennahverkehr, wobei das Programm, wenn es von einem Computer ausgeführt wird, den Computer dazu veranlasst, das Verfahren nach Anspruch 5 durchzuführen.

## Revendications

1. Dispositif de traitement d'informations (110) configuré pour prédire un degré de congestion de circulation dans les transports en commun, comprenant :
une unité de collecte de données (112) configurée pour collecter des données de capteur à partir d'une pluralité de capteurs (101), les données de capteur indiquant un facteur externe lié à un accident de circulation ou à des conditions météorologiques extrêmes ;
une unité de génération de données de détermination (131) configurée pour générer des données de lot de détermination incluant des données apprises et des données non apprises, les données apprises correspondant aux données de capteur et étant des données d'apprentissage qui ont déjà été utilisées pour apprendre un premier modèle d'apprentissage afin d'effectuer une prédiction du degré de congestion de la circulation sur la base des données de capteur, les données non apprises correspondant aux données de capteur et n'étant pas utilisées pour apprendre le premier modèle d'apprentissage ;
une unité de détermination de ré-apprentissage (132) configurée pour calculer des scores de propension pour les données apprises et les données non apprises en utilisant une covariable affectant le degré de congestion de circulation prédit par le premier modèle d'apprentissage pour effectuer une stratification en attribuant les données apprises et les données non apprises à une pluralité de couches, et pour déterminer si le premier modèle d'apprentissage doit être réappris ou non en utilisant une fréquence d'apparition d'une couche critique et une fréquence d'apparition de données critiques à partir d'un résultat de la stratification, la couche critique étant une couche déterminée comme présentant un degré d'importance élevé parmi la pluralité de couches, les données critiques étant des données déterminées comme présentant un degré d'importance élevé parmi les données non apprises et les données apprises ; et
une unité de ré-apprentissage (141) configurée pour réapprendre le premier modèle d'apprentissage lorsque l'unité de détermination de ré-apprentissage (132) détermine que le modèle d'apprentissage doit être ré-appris,
dans lequel l'unité de détermination de ré-apprentissage (132) est en outre configurée pour déterminer, en tant que couche critique, la couche présentant le degré élevé d'importance parmi la pluralité de couches en tant que : une couche présentant une précision de prédiction moyenne égale ou inférieure à un seuil prédéterminé ou une couche dont la différence entre une précision de prédiction des données non apprises et une précision de prédiction des données apprises est égale ou supérieure à un seuil prédéterminé.

2. Dispositif de traitement d'informations (110) selon la revendication 1, dans lequel l'unité de détermination de ré-apprentissage (132) est en outre configurée pour déterminer que le premier modèle d'apprentissage doit être ré-appris lorsque la fréquence d'apparition de la couche critique est égale ou supérieure à un seuil prédéterminé et/ou lorsque la fréquence d'apparition des données critiques est égale ou supérieure à un seuil prédéterminé.

3. Dispositif de traitement d'informations (110) selon la revendication 1 ou 2, dans lequel l'unité de détermination de ré-apprentissage (132) est configurée pour déterminer que les données non apprises et les données apprises contenues dans la couche critique sont les données critiques.

4. Dispositif de traitement d'informations (110) selon l'une quelconque des revendications 1 à 3, dans lequel l'unité de détermination de ré-apprentissage (132) est configurée pour utiliser un second modèle d'apprentissage pour déterminer si oui ou non les données non apprises et les données apprises contenues dans des couches de la pluralité de couches autres que la couche critique sont les données critiques, le second modèle d'apprentissage étant un modèle d'apprentissage différent du premier modèle d'apprentissage.

5. Procédé de traitement d'informations mis en œuvre par ordinateur pour prédire un degré de congestion de circulation dans les transports en commun, comprenant les étapes consistant à :
collecter des données de capteur à partir d'une pluralité de capteurs (101), les données de capteur indiquant un facteur externe lié à un accident de circulation ou à des conditions météorologiques extrêmes ;
générer des données de lot de détermination incluant des données apprises et des données non apprises, les données apprises correspondant aux données de capteur et étant des données d'apprentissage qui ont déjà été utilisées pour apprendre un modèle d'apprentissage afin d'effectuer une prédiction du degré de congestion de la circulation sur la base des données de capteur, les données non apprises correspondant aux données de capteur et n'étant pas utilisées pour apprendre le modèle d'apprentissage ;
calculer des scores de propension pour les données apprises et les données non apprises en utilisant une covariable affectant le degré de congestion de circulation prédit par le modèle d'apprentissage pour effectuer une stratification en attribuant les données apprises et les données non apprises à une pluralité de couches ; et
déterminer si oui ou non le modèle d'apprentissage doit être réappris en utilisant une fréquence d'apparition d'une couche critique et une fréquence d'apparition de données critiques à partir d'un résultat de la stratification, la couche critique étant une couche déterminée comme présentant un degré d'importance élevé parmi la pluralité de couches, les données critiques étant des données déterminées comme présentant un degré d'importance élevé parmi les données non apprises et les données apprises ; et
réapprendre le modèle d'apprentissage sur la base de la détermination que le modèle d'apprentissage doit être réappris,
dans lequel une couche présentant une précision de prédiction moyenne égale ou inférieure à un seuil prédéterminé ou une couche dont la différence entre une précision de prédiction des données non apprises et une précision de prédiction des données apprises est égale ou supérieure à un seuil prédéterminé est déterminée en tant que couche critique de la pluralité de couches.

6. Programme pour prédire un degré de congestion dans les transports en commun, dans lequel, lorsqu'il est exécuté par un ordinateur, le programme amène l'ordinateur à exécuter le procédé selon la revendication 5.
